# EUROPEAN PATENT SPECIFICATION

(11) **EP 0 968 676 B1**
(45) Date of publication and mention of the grant of the patent: **04.09.2002**
(21) Application number: 98305155.8
(22) Date of filing: 30.06.1998
(51) Int. Cl.: A47J 27/04, A47J 37/04

(54) **Steam rotisserie**
Dampf-Bratgerät
Rôtisseur à vapeur

(43) Date of publication of application: 05.01.2000
(73) Proprietor: Wing Shing Products (BVI) Co. Ltd., Road Town, Tortola (VG)
(72) Inventor: Sham,John Chun Kuen, 26 Wong Chuk Hang Rd Aberdeen Hong Kong (CN)
(74) Representative: Woodward, John Calvin

(56) References cited:
- DE-U- 29 722 846
- FR-A- 2 625 795
- US-A- 2 558 294
- US-A- 4 810 856
- US-A- 4 979 439

## Description

The present invention relates to rotisseries and, more particularly, to a steam rotisserie that introduces steam into the rotisserie's cooking chamber, as the spit rotates the roasting food. It is known from FR 2625795 to provide a steam rotisserie for heating and steaming food upon a rotary spit disposed within a cooking chamber thereof, comprising a housing containing a cooking chamber, a rotary spit rotatably disposed within said chamber, for supporting food to be heated and steamed therewithin, driving means for rotationally driving said rotary spit, a water reservoir for supplying water to generate steam, a heating coil for supplying heat to said cooking chamber, and a steam-generating means connected to said reservoir and receiving water therefrom for evaporation substantially instantaneously into steam.

US Patent No. 4810856 also discloses a steam rotisserie which attempts to provide internal moisture to meat as it is being roasted on a spit. The introduction of steam into a rotisserie apparatus is intended to reduce cooking time, as well as prevent the burning or charring of the meat.

This prior art device is designed to cook only whole chickens. In order for it to cook properly a solid side of beef or a roast, the meat on the spit would have to have an internal section removed, so that the perforations in the tubular spit will allow the free (unencumbered) emission of steam into the meat without the build up of internal pressure therein. The method further requires additional preparation of the meat which, in many cases, would spoil the look of the food. None of the above is practical.

The present invention provides a workable, practical steam rotisserie that can roast a wide variety of meats. The current invention has many operative features that are not suggested by the prior art.

The preferred steam rotisserie of this invention has a water reservoir that feeds a steam-generating tube which is contiguous with the heating coil, the tube introducing steam into the rotisserie's cooking chamber. This contiguity is very efficient in producing steam, as a substantially instantaneous flashing of water in the tube becomes steam. Water for the steam is preferably fed via a one-way check valve disposed in the bottom portion of the water reservoir. The steam-generating tube is gravity-fed from the water reservoir. A selector knob, disposed along a water feed-tube from the reservoir to the steam-generating tube may be provided to enable a user to limit the amount of water being fed into the steam-generating tube and, hence, the amount of steam introduced into the cooking chamber.

In addition to this very practical way of introducing steam into a rotisserie, the invention also has other preferable features that produce a user-friendly apparatus. For example, the water reservoir can be permanently and integrally formed in the rotisserie's housing, or it can be designed as a removable, refillable container. With the latter, the reservoir can be periodically cleaned of sediments and other water-borne contaminants.

The preferred steam rotisserie apparatus of this invention also conveniently provides for a vertically-disposed, rotary spit. The vertical orientation of the spit is advantageous, in that the juices from the roasting meat will flow back over the meat onto a collection pan. The vertical orientation thus provides a self-basting feature.

It is an object of this invention to provide an improved steam rotisserie.

It is another object of the invention to provide a steam rotisserie that very efficiently generates, produces and utilises steam in order to thoroughly cook food on a spit.

It is a further object of this invention to provide a steam rotisserie that has a self-basting capability.

A steam rotisserie according to the present invention is characterised in that the steam generating means is contiguous with a first portion of said heating coil, and in that the heating coil is bifurcated to form a second portion that extends from the first portion into the cooking chamber.

The present invention provides a steam rotisserie that can roast a wide variety of means and foods. The preferred rotisserie apparatus comprises a housing supporting a cooking chamber. The housing also contains a water reservoir that gravitationally feeds water to a steam-generating tube. The steam-generating tube is disposed contiguously adjacent to a heating coil supplying radiant heat to the cooking chamber. The proximity of the water-fed, steam-generating tube to the heating coil allows the water therein to evaporate into steam, which is forced into the cooking chamber. A selector knob is particularly provided in the water reservoir section of the housing and operates a valve disposed in a water-supply tube limiting the amount of water being fed to the steam-generating tube an, hence, the amount of steam being introduced into the cooking chamber. The rotisserie's rotary spit is preferably disposed vertically within the cooking chamber. This vertically-oriented spit provides a self-basting feature, as it allows cooking juices to flow over the roasting meat on their way to a collection pan.

The present invention will now be described, by way of example only, with reference to the accompanying drawings, in which:
Figure 1 illustrates a front, cutaway view of the steam rotisserie of this invention; and
Figure 2 depicts a bottom, sectional view of the steam rotisserie apparatus shown in Figure 1.

Generally speaking, the invention features a method of rapidly generating steam and introducing that steam into the cooking chamber of a rotisserie. The steam generated by the invention is flash-generated via a steam-generating tube that carries water past an adjacent heating coil to the cooking chamber. The rotary spit of the rotisserie is oriented in a substantially vertical direction. This vertical orientation allows self-basting to take place, as the juices of the cooking meat flow over the meat to a collection pan.

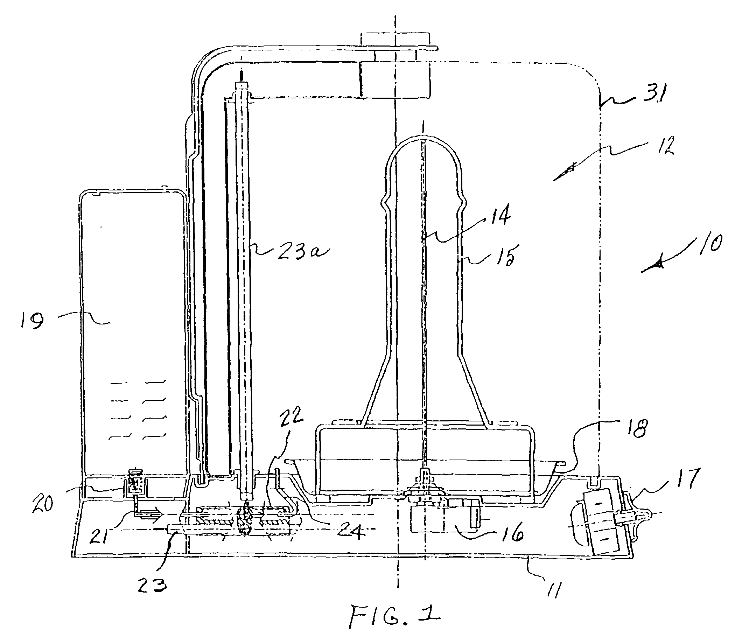

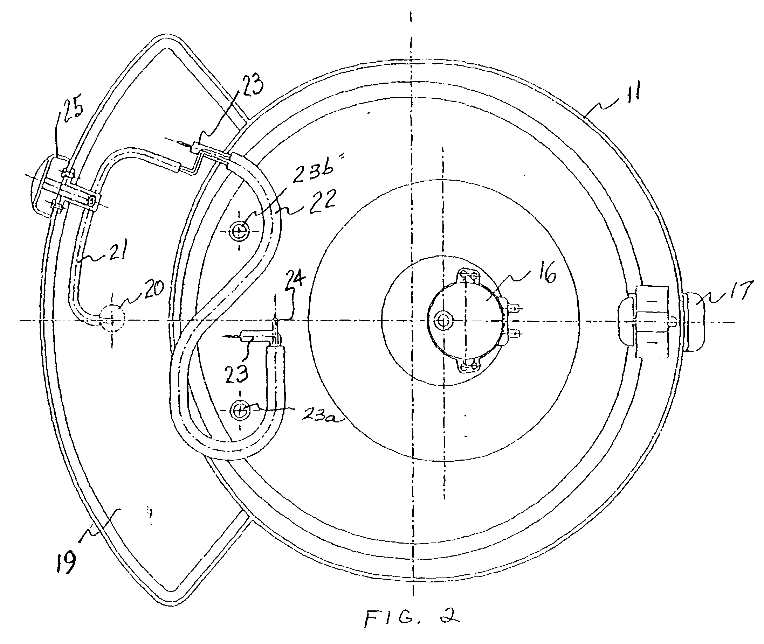

Now referring to Figure 1 and 2, the steam rotisserie 10 of this invention is shown. The steam rotisserie 10 comprises a housing 11, which contains a cooking chamber 12. The rotisserie 10 comprises a vertically-oriented and supported rotatable spit 14 for spearing and carrying roasts such as sides of beef. The rotisserie 10 also supports a frame 15 that fits over the spit 14. This frame 15 is used as a center support inside the carcass driven by an electric motor 16. A switch 17 mounted on the front of the rotisserie 10 allows the user of the rotisserie to select different cooking programs which influence the speed of rotation of both spit 14 and the frame 15. Below the spit 14 and the frame 15 is a collection pan 18 for catching the juices emitted from a roasting piece of meat.

The vertical orientation of both the spit 14 and the frame 15 provides a self-basting feature to the rotisserie apparatus. The vertical orientation allows for juices emitted from the cooking meat to flow over the meat as they run off, dropping onto the collection pan 18. In this way, the flavour of the meat is enhanced through this self-basting procedure.

The housing 11 also supports a water reservoir 19 that has a one-way check valve 20 disposed in a bottom portion thereof. Water contained inside the reservoir 19 is fed through the one-way check valve 20 to a water-feed-tube 21. The water-feed tube 21 supplies water to a steam-generating means in the preferred form of tube 22 contiguously adjacent a portion of a heating coil 23, which causes the water in the steam-generating tube 22 to evaporate substantially instantaneously into steam. The steam is rapidly expelled into the cooking chamber 12 through a vertically-oriented nozzle 24. The flashing action of the steam in the tube 22 allows for the rapid selection and implementation of different steam and heating modes commensurate with the type(s) of meat being cooked. The different cycles can be controlled by a microprocessor (not shown) and a control panel (not shown) located on the front portion of the rotisserie 10.

A switch-flow valve 25 located at the rear of the reservoir 19 is connected to the water-feed tube 21; it controls the amount of water flowing through the water-feed tube 21. A user of the rotisserie 10 can adjust the amount of steam being generated and injected into the cooking chamber 12 via the switch-flow valve 25.

The housing 11 also supports a transparent, bell-shaped cover-plate 31. The cover-plate 31 is removable, so as to allow the user of the rotisserie 10 to place a piece of meat upon the spit 14 or the frame 15.

As it extends from the housing 11 into the cooking chamber 12, the heating coil 23 bifurcates into two, twin, heating-coil sections 23a and 23b. The heating coils 23a and 23b respectively extend to the full height of the cooking chamber 12, furnishing radiant, infrared heat thereto.

The reservoir 19 may be a permanently mounted container supported by the housing 11, or it may be fabricated as a refillable, removable container. As a removable container, the reservoir 19 can be periodically removed for cleaning sediments and other water-borne contaminants from the reservoir 19.

## Claims

1. A steam rotisserie for heating and steaming food upon a rotary spit disposed within a cooking chamber thereof, comprising:
a housing (11) containing a cooking chamber (12);
a rotary spit (14) rotatably disposed within said chamber, for supporting food to be heated and steamed therewithin;
driving means (16) for rotationally driving said rotary spit (14);
a water reservoir (19) for supplying water to generate steam;
a heating coil (23) for supplying heat to said cooking chamber (12), and
a steam-generating means (22) connected to said reservoir and receiving water therefrom for evaporation substantially instantaneously into steam,
**characterised in that** the steam generating means (22) is contiguous with a first portion of said heating coil (23), and **in that** the heating coil (23) is bifurcated to form a second portion that extends from the first portion into the cooking chamber (12).

2. A steam rotisserie according to claim 1, wherein the first and second portions of the heating coil (23) extend substantially at right angles to each other.

3. The steam rotisserie for heating and steaming food in accordance with claim 1 or claim 2, **characterised in that** the reservoir includes a one-way check value (25) for allowing water disposed therein to gravitationally feed to said steam-generating means (22).

4. The steam rotisserie for heating and steaming food in accordance with any preceding claim **characterised in that** said housing further supports a transparent cover-plate (31).

5. The steam rotisserie for heating and steaming food in accordance with any preceding claim further **characterised by** a collection pan (18) disposed below said rotary spit, said rotary spit being substantially vertically disposed within said cooking chamber, whereby cooking juices emitted from food disposed upon said rotary spit will flow over said food as they flow downwardly towards said collection pan.

6. A steam rotisserie for heating and steaming food in accordance with any preceding claim **characterised by** a selector, flow-valve switch (25) operatively connected between said reservoir and said steam-generating means for controlling the amount of steam being generated and injected into said cooking chamber.

## Patentansprüche

1. Dampf-Bratgerät zum Erhitzen und Bedampfen von Lebensmitteln auf einem Drehspieß, der in deren Garkammer angeordnet ist, umfassend:
ein Gehäuse (11), das eine Garkammer (12) enthält;
einen Drehspieß (14), der drehbar in dieser Kammer angeordnet ist, um die darin zu erhitzenden und zu bedampfenden Lebensmittel zu tragen;
Antriebsmittel (16), um den Drehspieß (14) rotierend anzutreiben;
einen Wasserbehälter (19) für die Wasserversorgung zur Dampferzeugung;
eine Heizwendel (23) zur Wärmeversorgung der Garkammer (12), und ein Dampferzeugungsmittel (22), das mit dem Behälter verbunden ist und Wasser daraus erhält, um es im Wesentlichen sofort zu verdampfen,
**dadurch gekennzeichnet, dass** das Dampferzeugungsmittel (22) einem ersten Abschnitt der Heizwendel (23) benachbart ist, und dass die Heizwendel (23) gabelförmig ist, um einen zweiten Abschnitt zu bilden, der vom ersten Abschnitt aus durch die Garkammer (12) verläuft.

2. Dampf-Bratgerät nach Anspruch 1, wobei der erste und der zweite Abschnitt der Heizwendel (23) im Wesentlichen rechtwinklig zueinander verlaufen.

3. Dampf-Bratgerät zum Erhitzen und Bedampfen von Lebensmitteln nach Anspruch 1 oder 2, **dadurch gekennzeichnet, dass** der Behälter ein Rückschlagventil (25) umfasst, um das Abfließen des darin enthaltenen Wassers zum Dampferzeugungsmittel (22) durch Schwerkraft zu gestatten.

4. Dampf-Bratgerät zum Erhitzen und Bedampfen von Lebensmitteln nach einem der vorhergehenden Ansprüche, **dadurch gekennzeichnet, dass** das Gehäuse des weiteren eine transparente Abdeckung (31) trägt.

5. Dampf-Bratgerät zum Erhitzen und Bedampfen von Lebensmitteln nach einem der vorhergehenden Ansprüche, **gekennzeichnet durch** eine Auffangwanne (18), die unter dem Drehspieß angeordnet ist, wobei der Drehspieß im Wesentlichen senkrecht in der Garkammer angeordnet ist, wodurch die Säfte, die aus den am Drehspieß angebrachten Lebensmitteln austreten, über das Lebensmittel laufen, wenn sie zur Auffangwanne hin ablaufen.

6. Dampf-Bratgerät zum Erhitzen und Bedampfen von Lebensmitteln nach einem der vorhergehenden Ansprüche, **gekennzeichnet durch** einen Durchflussregler (25), der auf betriebsmäßig zwischen dem Wasserbehälter und dem Dampferzeugungsmittel angeschlossen ist, um die Dampfmenge zu regeln, die erzeugt und in die Garkammer eingeleitet wird.

## Revendications

1. Une rôtissoire à vapeur d'eau destinée à chauffer et passer à la vapeur d'eau un aliment situé sur une broche rotative située à l'intérieur d'une chambre de cuisson, comprenant :
un logement (11) contenant une chambre de cuisson (12) ;
une broche rotative (14) montée rotative à l'intérieur de ladite chambre en vue de supporter un aliment destiné à être chauffé et soumis à la vapeur d'eau dans celle-ci ;
des moyens d'entraînement (16) destinés à entraîner en rotation ladite broche rotative (14) ;
un réservoir d'eau (19) destiné à envoyer de l'eau en vue de générer de la vapeur d'eau ;
un serpentin chauffant (23) destiné à apporter de la chaleur à ladite chambre de cuisson (12) ; et
des moyens de génération de vapeur d'eau (22) connectés audit réservoir et en recevant de l'eau en vue de son évaporation pratiquement instantanée sous forme de vapeur d'eau,
**caractérisée en ce que** les moyens de génération de vapeur d'eau (22) sont contigus à une première portion dudit serpentin chauffant (23) et **en ce que** le serpentin chauffant (23) se divise pour former une seconde portion qui s'étend depuis la première portion jusque dans la chambre de cuisson (12).

2. Une rôtissoire à vapeur d'eau selon la revendication 1, dans laquelle la première et la seconde portion du serpentin chauffant (23) s'étendent pratiquement à angle droit l'un par rapport à l'autre.

3. La rôtissoire à vapeur d'eau destinée à chauffer et passer à la vapeur un produit alimentaire selon la revendication 1 ou la revendication 2, **caractérisée en ce que** le réservoir comporte une soupape unidirectionnelle (25) destinée à permettre à l'eau qui y est située d'alimenter par gravité lesdits moyens de génération de vapeur (22).

4. La rôtissoire à vapeur d'eau destinée à chauffer et passer à la vapeur un produit alimentaire selon l'une quelconque des revendications précédentes, **caractérisée en ce que** ledit logement supporte au surplus un couvercle transparent (31).

5. La rôtissoire à vapeur d'eau destinée à chauffer et passer à la vapeur un produit alimentaire selon l'une quelconque des revendications précédentes, caractérisée au surplus par un lèchefrite (18) situé au-dessous de ladite broche rotative, ladite broche rotative étant disposée pratiquement verticalement à l'intérieur de ladite chambre de cuisson, de sorte que les jus de cuisson émis par le produit disposé sur ladite broche rotative s'écoule sur ledit produit alimentaire à mesure qu'il s'écoule vers le bas vers ledit lèchefrite.

6. Une rôtissoire à vapeur d'eau destinée à chauffer et passer à la vapeur un produit alimentaire selon l'une quelconque des revendications précédentes, **caractérisée par** un commutateur sélecteur d'écoulement (25) connecté de manière opératoire entre ledit réservoir et lesdits moyens de génération de vapeur en vue de contrôler la quantité de vapeur d'eau générée et injectée dans ladite chambre de cuisson.
